# EUROPÄISCHE PATENTSCHRIFT

(11) **EP 2 924 109 B1**
(45) Veröffentlichungstag und Bekanntmachung des Hinweises auf die Patenterteilung: **01.02.2017**
(21) Anmeldenummer: 15159172.4
(22) Anmeldetag: 16.03.2015
(51) Int. Cl.: C12C 1/00, C12C 1/02, C12C 1/033, C12C 1/12

(54) **Verfahren zum Weichen, Keimen und Darren von Keimgut**
METHOD FOR SOAKING, SPROUTING AND KILNING GERMINATING GRAIN
PROCÉDÉ DE TREMPAGE, DE GERMINATION ET SÉCHAGE DE PRODUIT DE GERMINATION

(30) Priorität: 24.03.2014 DE 102014104008
(43) Veröffentlichungstag der Anmeldung: 30.09.2015
(73) Patentinhaber: Bartmer, Moritz, 21614 Buxtehude (DE)
(72) Erfinder: Bartmer, Moritz, 21614 Buxtehude (DE)
(74) Vertreter: Hansen, Jochen

(56) Entgegenhaltungen:
- DE-A1-102011 111 271
- DE-C- 207 476
- DE-C- 328 755
- DE-U1-202009 005 209

## Beschreibung

Die Erfindung betrifft ein Verfahren zum Weichen, Keimen und Darren von Keimgut, insbesondere Getreide, bei dem dem in genau einem Behälter mit Öffnung aufgenommenen, zu behandelnden Keimgut aufeinanderfolgend zum Weichen Weichwasser zu- und wieder abgeführt, zum Keimen bedarfsweise Wasser zugeführt und zum Darren Wärme zugeführt wird, wobei zum Durchmischen des Keimgutes der Behälter um eine Drehachse gedreht und das Keimgut dabei unter Umgebungsluft durchmischt wird.

Aus der DE 207 476 A ist ein derartiges Verfahren zum Weichen, Keimen und Darren von Keimgut bekannt. Bei diesem Verfahren wird in einer Trommel aufgenommenes Keimgut durch eine drehende oder oszillierende Bewegung um eine über Drehzapfen definierte Drehachse durchmischt.

Ein weiteres Verfahren zum Waschen, Weichen, Keimen, Trocknen, Darren, Rösten und/oder Lagern von Keimgut ist aus der DE 10 2011 111 271 A1 bekannt. Der Behälter weist eine kreiszylindrische Behälterwand, die längs einer sich vertikal erstreckenden Behälterachse ausgerichtet ist, und einen horizontalen Behälterboden, der bevorzugt luftdurchlässig ausgestaltet ist, auf. In weiterer Ausgestaltung ist in dem Behälter eine drehbar gelagerte erste Wendel, die ein Anheben und fern von der Behälterwand Absenken des darin aufgenommenen Keimgutes erlauben soll. Mit dieser Vorrichtung sollen vergleichsweise kleine Mengen an Keimgut automatisiert herstellbar sein.

Nachteilig ist an der Vorrichtung gemäß DE 10 2011 111 271 A1, dass der stationäre Behälter eine Vielzahl von Durchführungen für die Wasserzufuhr, das Ablassen von Abwässern, das Einblasen von Luft und die Lagerung der drehbaren ersten Wendel erfordert, womit eine hygienische Reinigung schwierig zu gewährleisten ist. Ferner neigt das am Behälterboden angeordnete luftdurchlässige Lochblech zu Verstopfungen, die eine gleichmäßige Belüftung erschweren. Das Lochblech ist ebenfalls schwierig zu reinigen.

Die DE 328 755 A beschreibt eine umlaufende Malztrommel mit Zentralrohr und Einrichtung zur seitlichen Hin- und Herbewegung des Gutes während der Trommeldrehung, womit das Weichen, Lüften und Trocknen bzw. Darren in dieser Trommel durchgeführt werden kann. Dabei wird die Durchmischung des Malzgutes durch zwei konzentrische, entgegengesetztgängige Schnecken bewirkt, von denen die eine an einem Zentralrohr und die andere am Trommelmantel sitzt. Über das Zentralrohr wird über eine Öffnung die Luftzufuhr und über eine weitere Öffnung die Luftabfuhr erreicht.

Weiter ist aus der DE 20 2009 005 209 U1 eine Vorrichtung zur Malzbereitung, mit einer drehbaren Keim-Darr-Trommel bekannt, die an einer ihrer Stirnseiten oder an ihren beiden Stirnseiten einen feststehenden, sich bei einem Drehen der Keim-Darr-Trommel nicht mitdrehenden Mittelteil aufweist.

Ferner ist aus der WO 2013/044984 A1 eine Vorrichtung und Verfahren zum Weichen, Keimen, Darren, Fermentieren und/oder Kombinationen daraus von Korn bekannt, bei dem diese Vorgänge in einem Bearbeitungsraum, bevorzugt in einem Standardcontainer, durchgeführt werden. Der apparative Aufwand ist für die Durchmischung des auf dem Containerboden verteilten Keimgutes erheblich und bedarf einer aufwendigen mechanischen Apparatur.

Ausgehend vom erstgenannten Stand der Technik ist es daher Aufgabe der Erfindung ein Verfahren anzugeben, mit dem kleine Mengen an Keimgut automatisiert in einer sehr einfachen Vorrichtung bearbeitet werden können.

Gelöst wird diese Aufgabe mit einem Verfahren gemäß Anspruch 1.

Durch das Drehen des Behälters zum Durchmischen des Keimgutes wird das Keimgut besonders gleichmäßig und schonend behandelt, da die gesamte Oberfläche des Behälters durch seine Drehung das darin aufgenommene Keimgut mitbewegt und vermischt. Beim Kippen der Rotationsachse aus der Vertikalen in eine diagonal schräge Lage oder gar in eine horizontale Lage der Drehachse wird die Oberfläche des im Behälter aufgenommenen Keimgutes größer, was zu einer verbesserten Belüftung, aber auch Befeuchtung beim Besprühen mit Wasser oder Erwärmung durch die von außen erwärmte Behälterwandung führt. Durch den eingestellten Kippwinkel des Behälters (Winkel der Behälterrotationsachse zur Vertikalen) kann die sich im Behälter bildende resultierende freie Oberfläche vergrößert bzw. verkleinert werden, um eine geeignete Belüftung des Keimgutes zu erzielen.

Wenn das Keimgut durch im Behälter fest angesetzte, schneckenförmige Mischsegmente bei der Drehung des Behälters durchmischt wird, wird die Durchmischung aufgrund der Behälterdrehung durch die schneckenförmigen Mischsegmente deutlich verstärkt. Die Mischsegmente sorgen dabei für ein Herausheben von weiter unten liegendem Keimgut, so dass auch eine vertikale Durchmischung und eine regelmäßige Belüftung durch das Herausheben des Keimgutes erfolgt. Bei einem schneckenförmigen Mischsegment wird je nach Drehrichtung des Behälters zusätzlich eine axiale Förderung des Keimgutes in dem Behälter, entweder zum Boden des Behälters oder zur Öffnung des Behälters bewirkt.

Dadurch, dass die Drehrichtung und/oder Drehzahl des Behälters gesteuert werden, kann bei schneckenförmigen Mischsegmenten die axiale Förderrichtung zum Boden oder zur Öffnung des Behälters durch Einstellen der Drehrichtung gewählt werden. Die Drehzahl wird in Abhängigkeit des gerade durchgeführten Verfahrensschrittes in geeigneter Weise vorgewählt, nämlich relativ hohe Drehzahlen zum Reinigen und Weichen, beispielsweise von 10 bis 50 Umdrehungen pro Stunde oder relativ niedrige Drehzahlen zum Wenden und Belüften beim Keimen und Darren von beispielsweise 1 bis 5 Umdrehungen pro Stunde.

Wenn ein Waschen des Keimgutes im gleichen Behälter vor dem Weichen durchgeführt wird, kann zusätzlich auch dieser in Mälzungsprozessen häufig erforderliche Verfahrensschritt in dem automatisierten Verfahren in dem beschriebenen Behälter durchgeführt werden.

Dabei wird zum Waschen Waschwasser über die Öffnung zu- und abgeführt, wobei zum Abführen von aufschwimmenden Fremdstoffen der Behälter während der Drehung soweit gekippt wird, dass Waschwasser oberflächennah abfließen kann, womit auch größere und aufschwimmende Fremdstoffe leicht zusammen mit dem überschüssigen Waschwasser ausgegossen werden können.

Wenn das trockene Keimgut im Behälter vor den anderen Verfahrensschritten durch Drehen des Behälters gereinigt wird, kann vor den feuchten Verfahrensschritten, nämlich dem Weichen oder dem Waschen eine Trockenreinigung des zu behandelnden Keimgutes, insbesondere Getreide, durchgeführt werden. Die Drehung des trommelartigen Behälters bewirkt ein Aneinanderreiben der Getreidekörner, wodurch eine Reinigung der Kornoberflächen erreicht wird. Mit einem optional anschließenden Waschvorgang können dann die so trocken abgeriebenen Bestandteile ausgespült werden.

Dadurch, dass zum Abführen von überschüssigem Wasser die Öffnung mit einem das Keimgut zurückhaltenden Sieb geschlossen und der Behälter gekippt oder ausgekippt wird, kann überschüssiges Wasser ohne Verlust von darin schwimmendem Keimgut aus dem Behälter durch die Öffnung ausgekippt werden. Insbesondere schwerere Partikel, wie Sand und Staub können so mit dem Waschwasser aus dem Behälter entfernt werden. Ebenfalls kann überschüssiges Wasser während des Weichprozesses abgegeben werden, um Phasen der Nassweiche mit Phasen der Trockenweiche ggf. mehrfach abwechseln zu können.

Wenn in die Öffnung ein Luftstrom zum aktiven Belüften gerichtet wird, kann der Luftaustausch und damit der Trocknungsprozess des behandelten Keimgutes unterstützt und verstärkt werden. Durch eine ausreichend große Öffnung kann bereits ein für viele Verfahrensschritte ausreichender Luftaustausch gewährleistet werden. Für ein besonders effektives Trocknen für das Keimen und insbesondere für das Darren kann durch ein aktives Belüften der Trocknungsvorgang beschleunigt werden. Neben einer aktiven Belüftung durch Einblasen von Frischluft kann alternativ auch ein aktives Abziehen von verbrauchter (feuchter) Luft aus dem Innenraum des Behälters vorgenommen werden.

Um die über die Behälterwandung eingebrachte Wärmezufuhr zu unterstützen, kann in die Öffnung ein Heizstrahler gehalten werden. Durch die vom Heizstrahler auf das behandelte Keimgut wirkende Wärmestrahlung wird insbesondere die erste Phase des Darrens, das sog. Schwelken unterstützt und beschleunigt.

Wenn das Gewicht des Keimgutes im Behälter gemessen wird, kann der Mälzungsprozess, insbesondere der Wassergehalt sowie die Weichgradkontrolle in apparativ einfacher Weise durch die jeweilige Gewichtsbestimmung durchgeführt werden.

Nachfolgend wird ein Ausführungsbeispiel der Erfindung anhand der beiliegenden Zeichnung detailliert dargestellt.

Darin zeigt:

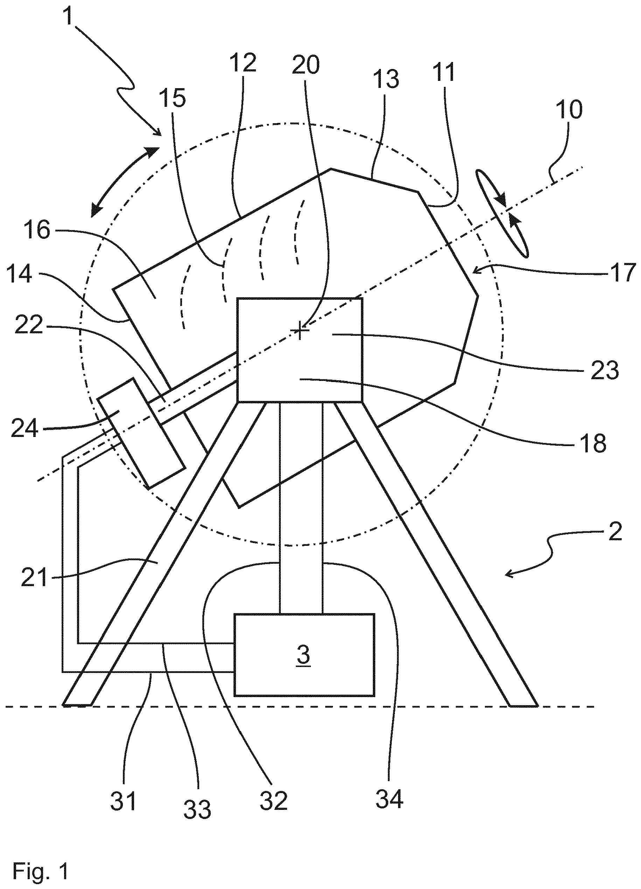

- Fig. 1: eine schematische Ansicht einer Vorrichtung zum Weichen, Keimen und Darren von Keimgut, teils im Querschnitt.

Fig. 1 zeigt eine Vorrichtung zum Weichen, Keimen und Darren von Keimgut in einer teils geschnittenen Ansicht. Die Vorrichtung ist ein beheizbarer Freifallmischer, der einen trommelförmigen Behälter 1 aufweist, der um seine Zylinderachse 10 drehangetrieben gelagert ist. Ebenfalls zur Durchführung der Erfindung sind Kipp-Tumbler geeignet, wie sie für die Fleischverarbeitung bekannt sind.

Zum Behälter 1 gehört ein Gestell 2, an dem der um Drehachse bzw. Zylinderachse 10 drehbare Behälter 1 gehaltert ist. Dabei weist das Gestell 2 Standbeine 21 auf, die bis zu einer horizontalen Schwenkachse 20 führen, wobei an den Standbeinen 21 an der Schwenkachse 20 eine U-förmige Quertraverse 22 schwenkbar angelenkt ist. Ein erster Elektromotor 23 ist vorgesehen, um die U-förmige Quertraverse 22 um die Schwenkachse 20 motorisch verschwenken zu können. Damit kann die Drehachse 10 des Behälters 1 von der in Fig. 1 dargestellten vertikalen Position verschwenkt bzw. gekippt werden.

Ferner ist an der U-förmigen Quertraverse 22 die Drehachse 10 des Behälters 1 angelenkt, wobei an der Quertraverse 22 ein zweiter Elektromotor 24 vorgesehen ist, der den Behälter 1 drehen kann. Der trommelartige Behälter 1 weist auf der dem drehbaren Ansatzpunkt gegenüberliegenden Seite eine Öffnung 11 auf. Ferner hat der Behälter eine zylinderförmige Behälterwandung 12, die sich zum Bereich der Öffnung 11 in einem konischen Abschnitt 13 verjüngt. Im Bereich des Ansatzpunktes für den Behälter auf der Drehachse 10 befindet sich ein geschlossener Boden 14 des Behälters 1.

Innenseitig auf der zylinderförmigen Behälterwandung 12 sind gestrichelt angedeutete Mischsegmente 15 in einer schneckenförmigen Umfangslinie vorgesehen. Ferner ist auf der Öffnung 11 ein Sieb 17 aufgesetzt, so dass fluider Ausgleich zwischen dem Behälterinneren und der Umgebung ermöglicht wird, jedoch im Behälter 1 aufgenommenes Keimgut zurückgehalten wird. Das Sieb 17 ist abnehmbar.

Ferner ist eine Steuereinheit vorgesehen, die Wirkverbindungen 31 und 32 zu dem ersten Elektromotor 23 und dem zweiten Elektromotor 24 aufweisen sowie eine dritte Wirkverbindung 33 zum Behälter 1 aufweist, um dort ein Heizelement 16 anzusteuern.

Nachfolgend wird das in dem beheizbaren Freifallmischer auszuführende Verfahren zum Weichen, Keimen und Darren von Keimgut, hier zur Malzherstellung, beschrieben.

In den drehbaren Behälter 1 des Freifallmischers wird eine vorbestimmte Charge von Keimgut, hier Gerste, beispielsweise 100 kg eingefüllt. Die Charge wird über die Wiegeeinrichtung 18 gewogen und das Füllgewicht in der Steuereinheit 3 aufgezeichnet. Nun wird über Steuereinheit 3 in einem ersten Verfahrensschritt (Trockenreinigung) ohne Zugabe von Wasser eine Trockenreinigung der eingefüllten Getreidemenge, hier Gerste, ausgeführt. Dabei wird von der Steuereinheit 3 und zweite Wirkverbindung 32 der zweite Elektromotor 24 an der U-förmigen Quertraverse 22 des Gestells 2 angesteuert und der Behälter 1 rotiert um Drehachse 10 mit einer Drehzahl von 10 bis 60 Umdrehungen pro Stunde.

Durch die Drehung des Behälters 1 werden die trockenen Gerstekörner aneinandergerieben, wodurch eine Reinigung der Kornoberfläche erreicht wird. Bevorzugt wird bei der Trockenreinigung die Drehachse 10 des Behälters 1 über den ersten Elektromotor 23 von der Vertikalen in einem Winkel von 40° bis 60°, bevorzugt 50° verschwenkt.

Im zweiten Verfahrensschritt erfolgt das Waschen der Gerste durch Einfüllen von Waschwasser in den Behälter 1. Um aufschwimmende Fremdbestandteile entfernen zu können, wird beim Rotieren des Behälters 1 der Behälter um die Schwenkachse 20 mit seiner Drehachse 10 weiter in Richtung Horizontale so weit geschwenkt, dass der Wasserspiegel bis an die Öffnung 11 des Behälters 1 heranreicht und beim weiteren Schwenken oberflächennahes Wasser zusammen mit den darin enthaltenen aufschwimmenden Bestandteilen, beispielsweise der Schwimmgerste und sonstigen aufschwimmenden Fremdbestandteilen ausgegossen werden. Dabei wird die Trommel (Behälter 1) nur so weit gekippt, dass die darin befindliche Gerste nicht mit ausgespült wird.

Anschließend wird das Sieb 17 auf die Öffnung 11 gesetzt und das übrige Waschwasser ausgekippt. Dabei hält das Sieb 17 die zu behandelnde Gerste im Behälter zurück und das Waschwasser wird zusammen mit Schmutzbestandteilen, wie Sand oder dergleichen abgelassen.

Nach dem Waschen, das bereits eine erste Weiche (Weichvorgang) für das Getreide darstellt, folgt als dritter Verfahrensschritt die Weiche. Dabei wird wiederum Wasser in den Behälter eingefüllt und nach einer gewissen Einwirkzeit unter ständiger Durchmischung (angekippte Rotation) wird das Weichwasser wieder entfernt. Danach erfolgt nach einer entsprechenden Belüftungszeit mit ebenfalls rotierender Trommel (Trockenweiche) wiederum die Zufuhr von Wasser, also ein weiterer Zyklus von Nassweiche und anschließender Trockenweiche. Bei der Weiche soll der Wassergehalt des Kornes auf 35 % bis 43 % angehoben werden, was optimal mit der Gewichtskontrolle über Wiegeeinrichtung 18 mit vierter Wirkverbindung 34 und Steuereinheit 3 in Phasen der Trockenweiche (ohne Wasserbeaufschlagung) kontrolliert werden kann.

Nachfolgend erfolgt als vierter Verfahrensschritt das Keimen. Dabei wird das so weit behandelte Keimgut unter wenig Feuchtigkeitsbeaufschlagung (kein überschüssiges Wasser) durchmischt, damit alle Gerstekörner möglichst einen homogenen Zustand erhalten und gleichmäßig mit Luftsauerstoff versorgt sind. Die Drehzahl beträgt nun ca. 1 bis 5 Umdrehungen pro Stunde, so dass eine sehr schonende Umwälzung des Keimgutes erfolgt. Dabei wirken die innenseitig der Behälterwandung 12 angeordneten Mischsegmente dazu, dass unten und außen liegende Körner nach oben und innen befördert werden. Wenn die Rotationsrichtung geändert wird, erfolgt entsprechend eine nach unten gerichtete Förderung der Gerstekörner.

Bei diesem Vorgang wird die Öffnung 11 vollständig offen gehalten und ggf. über ein gesondertes Belüftungsgerät Frischluft in den Behälter zugeführt und/oder verbrauchte Luft aus dem Behälter abgesogen. Bei der Keimung ist für eine ausreichende Luftzufuhr zu sorgen, aber gleichfalls ein ausreichender Feuchtegrad des Korns aufrecht zu erhalten. Dies kann durch Aufspritzen von Wasser mittels Wasserdüsen durch die Öffnung 11 erfolgen. Der Feuchtegehalt wird wiederum über die Wiegeeinrichtung 18 stets kontrolliert.

Sobald der nun entstandene Grünmalz seinen richtigen Reifegrad erreicht hat, erfolgt im nächsten, fünften Verfahrensschritt das Darren des Grünmalzes, um es lager- und transportfähig zu machen. Beim Darrprozess wird das Grünmalz von einer Feuchte von 40 % bis 45 % auf eine Feuchte von 4 % bis 5 % getrocknet. Dies erfolgt in zwei Teilschritten, nämlich in einem ersten Schritt beim Schwelken, bei dem nur eine geringe Erwärmung des Keimgutes durch eine Beheizung mit Heizelement 16 in der Behälterwandung 12 des Behälters 1 erfolgt. Die aufgrund der leichten Erwärmung in der Luft aufgenommene Feuchtigkeit wird durch ständigen Luftaustausch abgeführt, womit der Feuchtegehalt des Grünmalzes reduziert wird. Bei dem Schwelken wird insbesondere die Feuchtigkeit auf der Kornoberfläche, unter der Spelze und in den leicht zugänglichen oberen Schichten des Korns verdunstet, womit die im Keimling vorhandenen Enzyme geschont werden. Im zweiten Abschnitt, dem Abdarren, wird die Temperatur des Keimgutes insgesamt auf über 70°C, beispielsweise 75°C bis 120°C erhöht. Dem Korn wird dabei auch im Korninneren die Feuchte entzogen.

Um beim Darren die Temperaturen in dem Behälter weiter zu erhöhen und den Feuchtegehalt zu verringern, kann zusätzlich ein Heizstrahler vor der Öffnung 11 des Behälters 1 angeordnet werden, der eine ergänzende Beheizung mittels Strahlungswärme in das zu behandelnde Keimgut bringt. Anschließend kann das hergestellte Malz aus dem Behälter durch vollständiges Auskippen entleert und ausgeliefert oder gelagert werden.

### Bezugszeichenliste

- 1: Behälter
- 10: Zylinderachse, Drehachse
- 11: Öffnung
- 12: Behälterwandung
- 13: konischer Abschnitt
- 14: Boden
- 15: Mischsegment
- 16: Heizelement
- 17: Sieb
- 18: Wiegeeinrichtung

- 2: Gestell
- 20: Schwenkachse
- 21: Standbein
- 22: u-förmige Quertraverse
- 23: erster Elektromotor
- 24: zweiter Elektromotor

- 3: Steuereinheit
- 31: erste Wirkverbindung
- 32: zweite Wirkverbindung
- 33: dritte Wirkverbindung
- 34: vierte Wirkverbindung

## Patentansprüche

1. Verfahren zum Weichen, Keimen und Darren von Keimgut, insbesondere Getreide, bei dem dem in genau einem Behälter (1) mit Öffnung (11) aufgenommenen, zu behandelnden Keimgut aufeinanderfolgend
- zum Weichen Weichwasser zu- und wieder abgeführt,
- zum Keimen bedarfsweise Wasser zugeführt und
- zum Darren Wärme zugeführt wird,
wobei zum Durchmischen des Keimgutes der Behälter (1) um eine Drehachse (10) gedreht und das Keimgut dabei unter Umgebungsluft durchmischt wird,
**dadurch gekennzeichnet, dass** zum Durchmischen des Keimgutes der Behälter (1) um eine horizontale Schwenkachse (20) gekippt wird, womit ein Kippwinkel des Behälters (1), nämlich seiner Drehachse (10) zur Vertikalen, gesteuert wird, wobei das Zu- und Abführen von Wasser und Umgebungsluft ausschließlich durch die Öffnung (11) im Behälter (1) erfolgt.

2. Verfahren nach Anspruch 1, **dadurch gekennzeichnet, dass** Keimgut durch im Behälter (1) fest angesetzte, schneckenförmige Mischsegmente (15) bei der Drehung des Behälters (1) durchmischt wird.

3. Verfahren nach Anspruch 1 oder 2, **dadurch gekennzeichnet, dass** die Drehrichtung und/oder Drehzahl des Behälters (1) gesteuert werden.

4. Verfahren nach Anspruch 1, 2 oder 3, **dadurch gekennzeichnet, dass** ein Waschen des Keimgutes im gleichen Behälter (1) vor dem Weichen durchgeführt wird.

5. Verfahren nach Anspruch 4, **dadurch gekennzeichnet, dass** zum Waschen Waschwasser über die Öffnung (11) zu- und abgeführt wird, wobei zum Abführen von aufschwimmenden Fremdstoffen der Behälter (1) während der Drehung soweit gekippt wird, dass Waschwasser oberflächennah abfließen kann.

6. Verfahren nach einem der vorangehenden Ansprüche, **dadurch gekennzeichnet, dass** das trockene Keimgut im Behälter (1) vor den anderen Verfahrensschritten durch Drehen des Behälters (1) gereinigt wird.

7. Verfahren nach einem der vorangehenden Ansprüche, **dadurch gekennzeichnet, dass** zum Abführen von überschüssigem Wasser die Öffnung (11) mit einem das Keimgut zurückhaltenden Sieb (17) geschlossen und der Behälter (1) gekippt oder ausgekippt wird.

8. Verfahren nach einem der vorangehenden Ansprüche, **dadurch gekennzeichnet, dass** in die Öffnung (11) ein Luftstrom zum aktiven Belüften gerichtet wird.

9. Verfahren nach einem der vorangehenden Ansprüche, **dadurch gekennzeichnet, dass** in die Öffnung (11) ein Heizstrahler gehalten wird.

10. Verfahren nach einem der vorangehenden Ansprüche, **dadurch gekennzeichnet, dass** das Gewicht des Keimgutes im Behälter (1) gemessen wird.

## Claims

1. Method for steeping, germinating and kilning germinating material, in particular grain, in which the germinating material received in exactly one container (1) with opening (11) and to be treated
has successively
- for steeping, steeping water supplied to it and removed again from it,
- for germinating, if necessary water supplied to it and
- for kilning, heat supplied to it,
for thorough mixing of the germinating material the container (1) being rotated about an axis of rotation (10) and in so doing the germinating material being thoroughly mixed under ambient air,
**characterised in that** for thorough mixing of the germinating material the container (1) is tilted about a horizontal pivot axis (20), whereby a tilt angle of the container (1), namely of its axis of rotation (10) with respect to the vertical, is controlled, the supply and removal of water and ambient air being carried out exclusively through the opening (11) in the container (1).

2. Method according to Claim 1, **characterised in that** germinating material is thoroughly mixed by helical mixing segments (15) fixedly attached in the container (1) on the rotation of the container (1).

3. Method according to Claim 1 or 2, **characterised in that** the direction of rotation and/or rotational speed of the container (1) are controlled.

4. Method according to Claim 1, 2 or 3, **characterised in that** a washing of the germinating material is carried out in the same container (1) before the steeping.

5. Method according to Claim 4, **characterised in that** for the washing, washing water is supplied and removed via the opening (11), for removing floating foreign substances the container (1) being tilted during the rotation to such an extent that washing water near the surface can flow off.

6. Method according to one of the preceding claims, **characterised in that** the dry germinating material in the container (1) is cleaned before the other method steps by rotating the container (1).

7. Method according to one of the preceding claims, **characterised in that** for the removal of excess water, the opening (11) is closed with a screen (17) retaining the germinating material and the container (1) is tilted or emptied.

8. Method according to one of the preceding claims, **characterised in that** an air flow is directed into the opening (11) for active aeration.

9. Method according to one of the preceding claims, **characterised in that** a radiant heater is held in the opening (11).

10. Method according to one of the preceding claims, **characterised in that** the weight of the germinating material in the container (1) is measured.

## Revendications

1. Procédé de trempage, de germination et de séchage au four de produits susceptibles de germer, en particulier de céréales, dans lequel les produits susceptibles de germer à traiter, contenus dans exactement un récipient (1) avec une ouverture (11), subissent successivement
- pour le trempage, de l'eau de trempage est apportée puis évacuée,
- pour la germination, de l'eau est ajoutée si nécessaire et
- pour le séchage au four, de la chaleur est apportée,
pour mélanger les produits susceptibles de germer, le récipient (1) étant tourné autour d'un axe de rotation (10) et les produits susceptibles de germer étant à cette occasion mélangés à l'air ambiant,
**caractérisé en ce que** pour mélanger les produits susceptibles de germer, le récipient (1) est incliné autour d'un axe de pivotement horizontal (20) de sorte qu'il est possible de commander un angle d'inclinaison du récipient (1), à savoir son axe de rotation (10) par rapport à la verticale, l'apport et l'évacuation de l'eau et d'air ambiant étant réalisés exclusivement par l'ouverture (11) dans le récipient (1).

2. Procédé selon la revendication 1, **caractérisé en ce que,** durant la rotation du récipient (1), les produits susceptibles de germer sont mélangés par des segments de mélange (15) de forme hélicoïdale placés fixement dans le récipient (1).

3. Procédé selon la revendication 1 ou 2, **caractérisé en ce que** le sens de rotation et/ou la vitesse angulaire du récipient (1) sont commandés.

4. Procédé selon la revendication 1, 2 ou 3, **caractérisé en ce qu**'un lavage des produits susceptibles de germer est effectué dans le même récipient (1) avant le trempage.

5. Procédé selon la revendication 4, **caractérisé en ce que** pour le lavage, l'eau de lavage est introduite et évacuée à travers l'ouverture (11), le récipient (1) étant incliné pendant la rotation d'un angle tel que l'eau de lavage peut s'évacuer à proximité de la surface afin d'éliminer les substances étrangères flottantes.

6. Procédé selon l'une des revendications précédentes, **caractérisé en ce que,** avant les autres étapes du procédé, les produits susceptibles de germer secs sont nettoyés dans le récipient (1) en faisant tourner ledit récipient (1).

7. Procédé selon l'une des revendications précédentes, **caractérisé en ce que** pour éliminer l'excès d'eau, l'ouverture (11) est fermée avec un tamis (17) retenant les produits susceptibles de germer et le récipient (1) est incliné ou renversé.

8. Procédé selon l'une des revendications précédentes, **caractérisé en ce qu**'un jet d'air est dirigé dans l'ouverture (11) pour une aération active.

9. Procédé selon l'une des revendications précédentes, **caractérisé en ce qu**'un radiateur est tenu dans l'ouverture (11).

10. Procédé selon l'une des revendications précédentes, **caractérisé en ce que** le poids des produits susceptibles de germer est mesuré dans le récipient (1).
